# EUROPEAN PATENT APPLICATION

(11) **EP 3 754 181 A1**
(43) Date of publication of application: **23.12.2020**
(21) Application number: 18906259.9
(22) Date of filing: 14.02.2018
(51) Int. Cl.: F03D 9/22, H02K 7/18

(54) **ENERGY-TRANSFORMING DEVICE**

(71) Applicant: Ida Covertruck SL, 28009 Madrid (ES)
(72) Inventor: GUERRERO PADRÓN, Juan José, 28009 Madrid (ES)
(74) Representative: Elzaburu S.L.P.
(86) International application number: PCT/ES2018/070109
(87) International publication number: WO 2019/158785

(57) **Abstract**

A kinetic energy to thermal energy transformation device comprising a rotary shaft (5) that couples mechanically at the distal end of said rotary shaft (5) to an irregularly operating energy source, and at the proximal end of said rotary shaft (5) to an interior annular cylinder (3) disposed inside a concentric static hollow cylinder (2); a sealed closed vessel (1) is adapted to house the annular cylinder (3) and the concentric cylinder (2) in its interior and to be filled with a primary fluid (4), such that the rotational kinetic energy of the annular cylinder (3) is transformed into thermal energy by the internal friction of the primary fluid distributed between the interior surface of the concentric cylinder (2) and the exterior surface of the annular cylinder (3).

## Description

### Object

The present invention relates to an energy conversion device that transforms kinetic energy, supplied by an irregularly operating energy source such as a wind turbine, into thermal energy for storage.

### Background

Arrangements are known in the prior art that transform kinetic energy, from wind turbines, into thermal energy to produce electrical energy by means of an electricity generator.

### Summary

The present invention seeks to solve one or more of the disadvantages stated previously by means of a kinetic energy to thermal energy transformation device as defined in the claims.

The transformation device comprises a rotary shaft configured to be coupled mechanically at the distal end of the rotary shaft to an irregularly operating energy source, and at the proximal end of the rotary shaft to an interior annular cylinder disposed inside a concentric static hollow cylinder; the annular cylinder and concentric cylinder are adapted to be disposed inside a sealed closed vessel; the closed vessel is configured to be filled with a primary fluid in liquid phase that occupies all the free spaces existing between the vessel, the concentric cylinder and the annular cylinder, so that the rotational kinetic energy of the interior annular cylinder is transformed to thermal energy, or heat, by means of the internal friction of the primary fluid distributed between the interior surface of the concentric cylinder and the exterior surface of the annular cylinder.

The closed vessel is insulated externally to prevent heat leakage.

The primary fluid, in liquid phase with a high boiling point equal to and/or higher than the boiling point of water, is adapted to receive a substance added to modify its thermophysical properties, such as melting point or boiling point, increasing the capacity to absorb the heat generated by it inside the primary fluid in liquid phase.

The primary fluid can be of the type such as water, oil, mineral oil, vegetable oil, chemicals in liquid phase, such as sodium, potassium or similar.

The interior annular cylinder is concentric to the concentric static hollow cylinder such that the two cylinders are disposed in the form of a rotor-stator arrangement.

A plurality of first ribs are adapted to be distributed uniformly on the exterior surface of the annular cylinder, in a position parallel to the axis of rotation, in a position other than parallel to the axis of rotation such as inclined, according to a helix or similar.

A plurality of second ribs are adapted to be distributed uniformly on the interior surface of the concentric cylinder, in a position parallel to the axis of rotation, in a position other than parallel to the axis of rotation such as inclined, according to a helix or similar.

The number of first ribs may be equal to or different from the number of second ribs.

### Brief description of the drawings

A more detailed explanation is provided in the following description, based on the attached figures:

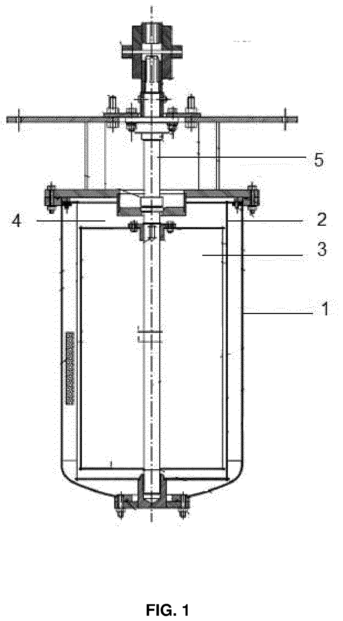

Figure 1 shows a cross-section of the kinetic energy to thermal energy transformation device in elevation view.

### Detailed description

In relation to figure 1, which shows a kinetic energy to thermal energy transformation device; said device comprises a rotary shaft 5 which is coupled mechanically, at the distal end of said rotary shaft 5, to an irregularly operating energy source such as a wind turbine, and at the proximal end of said rotary shaft 5 to an interior annular cylinder 3 disposed inside a concentric static hollow cylinder 2.

A sealed closed vessel 1 houses the annular cylinder 3 and the concentric cylinder 2 in its interior and, furthermore, the closed vessel 1 is filled with a primary fluid, such that the rotational kinetic energy of the interior annular cylinder 3 is transformed into thermal energy by the internal friction of the primary fluid distributed between the interior surface of concentric cylinder 2 and the exterior surface of the annular cylinder 3.

The annular cylinder 3 has a plurality of first ribs distributed uniformly over its exterior surface. Similarly, the concentric cylinder 2 has a plurality of second ribs distributed uniformly over its interior surface.

The first ribs are in a position parallel to the axis of rotation, in a position other than parallel to the axis of rotation such as inclined, according to a helix or similar.

Similarly, the second ribs are in a position parallel to the axis of rotation, in a position other than parallel to the axis of rotation such as inclined, according to a helix or similar.

The number of first ribs can be equal to or different from the number of second ribs, such that during the rotation of the annular cylinder 3 inside the concentric cylinder 2 there is no physical contact between the first and second ribs.

The interior annular cylinder 3 is concentric to the concentric static hollow cylinder 2 such that the two cylinders 2, 3 are disposed in the form of a rotor-stator arrangement.

The sealed closed vessel 1 is insulated externally to prevent leakage of heat generated within the primary fluid by the rotational movement of the annular cylinder 3.

When the annular cylinder 3 rotates inside concentric cylinder 2, turbulence is produced in the primary fluid 4 between the opposing faces of the two cylinders 2, 3, which generates viscous dissipation of the kinetic energy from the shaft 5, which is transformed to thermal energy, due to which the temperature of the primary fluid 4 increases while the interior cylinder 3 rotates. The result is that the primary fluid 5 is heated globally by convection within it, from the zone of turbulence at the interface between the two cylinders 2, 3.

Consequently, the primary fluid in liquid phase occupies all the free spaces existing in the closed vessel 1, between the concentric cylinder 2 and the annular cylinder 3.

The primary fluid in liquid phase has a boiling point equal to and/or higher than the boiling point of water. The primary fluid in liquid phase is adapted to receive a substance added to modify the thermophysical properties of same, such as its melting point or boiling point, increasing the capacity to absorb the heat generated by it inside the primary fluid in liquid phase.

The primary fluid in liquid phase can be of the type such as water, oil, mineral oil, vegetable oil, chemicals in liquid phase, such as sodium, potassium or similar.

The rise in temperature of the primary fluid 4 can be transferred to a heat exchanger device external to the closed vessel 1; transferring heat from the primary fluid 4 to a secondary fluid of the exchanger device, in order to generate domestic hot water and/or hot water for heating, or also as a hot source for driving a Stirling engine or a turbine by means of a Brayton cycle. To achieve this, the primary fluid 4 is circulated from the closed vessel 1 to the heat exchanger device by means of a hydraulic circuit where it delivers enthalpy from the hotter primary fluid to the colder secondary fluid, the cooled primary fluid then returning to the closed vessel 1 to be heated again.

The irregularly operating energy source can be of wind turbine, water mill, animal or mechanical traction type. The rotary shaft 5 can be disposed horizontally or vertically.

## Claims

1. A kinetic energy to thermal energy transformation device; **characterised in that** it comprises a rotary shaft (5) configured to be coupled mechanically at the distal end of said rotary shaft (5) to an irregularly operating energy source, and at the proximal end of said rotary shaft (5) to an interior annular cylinder (3) disposed inside a concentric static hollow cylinder (2); a sealed closed vessel (1) is adapted to house the annular cylinder (3) and the concentric cylinder (2) in its interior and to be filled with a primary fluid (4), such that the rotational kinetic energy of the annular cylinder (3) is transformed into thermal energy by the internal friction of the primary fluid distributed between the interior surface of the concentric cylinder (2) and the exterior surface of the annular cylinder (3).

2. A device as per claim 1; **characterised in that** a plurality of first ribs are adapted to be distributed uniformly over the exterior surface of the annular cylinder (3).

3. A device as per claim 2; **characterised in that** the first ribs are in a position parallel to the axis of rotation, in a position other than parallel to the axis of rotation such as inclined, according to a helix or similar.

4. A device as per claim 1; **characterised in that** a plurality of second ribs are adapted to be distributed uniformly over the interior surface of the concentric cylinder (2).

5. A device as per claim 4, **characterised in that** the second ribs are in a position parallel to the axis of rotation, in a position other than parallel to the axis of rotation such as inclined, according to a helix or similar.

6. A device as per claims 2 and 4; **characterised in that** the number of first ribs can be equal to or different from the number of second ribs.

7. A device as per claim 1, **characterised in that** the interior annular cylinder (3) is concentric to the concentric static hollow cylinder (2) such that the two cylinders (2, 3) are disposed in the form of a rotor-stator arrangement.

8. A device as per claim 1; **characterised in that** the sealed vessel (1) is insulated externally to prevent heat leakage.

9. A device as per claim 1; **characterised in that** primary fluid (4) in liquid phase occupies all the free spaces existing inside the closed vessel (1), between the concentric cylinder (2) and the annular cylinder (3).

10. A device as per claim 9; **characterised in that** the primary fluid (4) in liquid phase has a boiling point equal to and/or higher than the boiling point of water.

11. A device as per claim 10; **characterised in that** the primary fluid in liquid phase is adapted to receive a substance added to modify the thermophysical properties of same, such as melting point or boiling point, increasing the capacity to absorb the heat generated by it inside the primary fluid in liquid phase.

12. A device as per claim 9; **characterised in that** the primary fluid in liquid phase can be of the type such as water, oil, mineral oil, vegetable oil, chemicals in liquid phase, such as sodium, potassium or similar.
